Europäisches Patentamt

European Patent Office

Office européen des brevets

(11) Veröffentlichungsnummer: **0 343 570**
**A1**

## (12) EUROPÄISCHE PATENTANMELDUNG

(21) Anmeldenummer: 89109198.5

(22) Anmeldetag: 22.05.89

(51) Int. Cl.⁴: **H04M 1/72 , H04Q 7/04 ,**
**G06F 15/336**

(30) Priorität: 26.05.88 CH 2001/88

(43) Veröffentlichungstag der Anmeldung:
**29.11.89 Patentblatt 89/48**

(84) Benannte Vertragsstaaten:
**AT CH DE IT LI NL SE**

(71) Anmelder: **ASCOM AUTOPHON AG**
**Ziegelmattstrasse 1-15**
**CH-4503 Solothurn(CH)**

(72) Erfinder: **Meier, Felix**
**Roggenfar 31**
**CH-8193 Eglisau(CH)**
Erfinder: **Jürg, Ruprecht**
**Auhofstrasse 8**
**CH-8051 Zürich(CH)**

(74) Vertreter: **Scheidegger, Werner & Co.**
**Stampfenbachstrasse 48 Postfach**
**CH-8023 Zürich(CH)**

(54) **Verfahren zur Authentifikation einer Punkt-Punkt-Verbindung in einem Mehrbenützer-Kommunikationssystem.**

(57) In einem Kommunikationsystem sollen mehrere Sender-Empfänger-Paare das gleiche Uebertragungsmedium gleichzeitig benützen können. Damit jeder aktivierte Empfänger den ihm jeweils zugeordneten Sender erkennt, sind die folgenden Massnahmen vorgesehen: Jedem Sender im Kommunikationssystem ist ein Identifikationssignal exklusiv zugeteilt, das eine Folge von Symbolen aufweist und derart gewählt wird, dass jeder Wert der Kreuzkorrelation des Identifikationssignals mit jedem anderen im Kommunikationssystem vorkommenden Identifikationssignal signifikant kleiner ist als der Maximalwert der Autokorrelation des Identifikationssignals. Jeder aktivierte Empfänger im Kommunikationssystem speichert vorübergehend eine Anzahl der nacheinander empfangenen Symbole und bildet periodisch eine Kreuzkorrelation der gespeicherten Symbolfolge mit der Sollsymbolfolge des Identifikationssignals des zugeordneten Senders. Dann vergleicht der Empfänger die erhaltene Kreuzkorrelation mit der Autokorrelation der Sollsymbolfolge. Der sich ergebende Unterschied wird als Schätzung für die Authentifikation verwendet und ausgewertet.

# Verfahren zur Authentifikation einer Punkt-Punkt-Verbindung in einem Mehrbenützer-Kommunikationssystem

Die vorliegende Erfindung betrifft ein Verfahren zur Authentifikation einer Punkt-Punkt-Verbindung in einem Kommunikationssystem, dessen Uebertragungsmedium von mehreren Sender-Empfänger-Paaren gleichzeitig benützbar ist, bei welchem Verfahren jeder aktivierte Sender ein ihm exklusiv zugeteiltes Identifikationssignal wiederholt aussendet, das eine Folge von Symbolen aufweist, und jeder aktivierte Empfänger die empfangenen Identifikationssignale mit einer Sollsymbolfolge des Identifikationssignals des zugeordneten Senders vergleicht.

Ein Beispiel für bekannte Einrichtungen, die nach dem vorstehend erwähnten Verfahren arbeiten, ist in der US-PS 4 332 981 beschrieben. Es handelt sich dabei um eine schnurlose Telefoneinrichtung mit einem Mikrotelefon-Handgerät und einem an das Telefonnetz anzuschliessenden Basisgerät, das mit dem Handgerät über einen fest zugeteilten Funkkanal verbunden ist. Um Betriebsstörungen durch andere Funkeinrichtungen auf dem gleichen Funkkanal und insbesondere die Verbindungsaufnahme eines fremden Handgerätes mit dem Basisgerät zu vermeiden, wird alle Sekunden ein dem Sprachfrequenzband unterlagertes Identifikationssignal vom Handgerät zum Basisgerät übermittelt. Das Identifikationssignal besteht aus einem Codewort in Form einer 3-Bit-Symbolfolge, die vor Beginn der Uebermittlung durch manuell einstellbare Schalter vorgewählt wird. Im Basisgerät wird das empfangene Codewort mit einer dort in gleicher Weise voreingestellten Sollsymbolfolge verglichen. Bei Nichtübereinstimmung wird nach zehn Sekunden die Verbindung automatisch unterbrochen.

Dieses bekannte Authentifikations-Verfahren bietet wegen der verhältnismässig kurzen 3-Bit-Codewörter nur eine geringe Sicherheit gegen Missbrauch, da mit höchstens acht Versuchen das richtige Codewort gefunden werden kann. Zudem enthält diese bekannte Einrichtung keine Mittel zum Schutze vor Störungen und kurzen Verbindungsausfällen, wie sie im mobilen Funkverkehr häufig zu erwarten sind.

Deshalb verwenden andere bekannte Verfahren der eingangs genannten Art längere Codewörter, die nötigenfalls wiederholt übertragen werden, um Uebermittlungsfehler zu korrigieren. Solche Verfahren sind z.B. in der US-PS 4 467 141 und in der EP-PS 0 074 940 wie auch in der Empfehlung T/R 24-03 der "Commission Européenne des Postes et PTT (CEPT)" beschrieben.

Wenn das Identifikationssignal zur dauernden Ueberwachung der Verbindung in periodischen Zeitabständen unter Benützung des Sprachfrequenzbandes gesendet wird, entstehen für den Benützer unangenehme Gesprächslücken und hörbare Signale. Wenn zur Vermeidung dieses Nachteils die Uebertragung des Identifikationssignals ausschliesslich mit Frequenzen unterhalb des Sprachfrequenzbandes erfolgt, so steht nur noch eine verhältnismässig geringe Bandbreite zur Verfügung, weshalb dann pro Sekunde nur noch relativ wenige leicht unterscheidbare Symbole übertragen werden können.

Bei allen bekannten Verfahren der eingangs genannten Art müssen das senderseitige Ausstrahlen der Symbolfolge des Identifikationssigals und das empfängerseitige Vergleichen der ankommenden Signale mit der Sollsymbolfolge synchronisiert werden, so dass der Beginn jedes Vergleichsvorganges im Empfänger jeweils mit dem Anfang des Codewortes im Identifikationssignal des zugeordneten Senders zeitlich zusammenfällt. Um dies zu ermöglichen, strahlt der Sender bei den bekannten Verfahren jeweils einen aus drei Komponenten bestehenden Block von Signalen aus, nämlich eine Synchronisierinformation, das Codewort zur Identifikation und eine Zusatzinformation zur Behandlung von Uebertragungsfehlern. Falls der Empfänger am Anfang jedes ausgesendeten Signalblockes nicht synchronisiert wird, besteht die Gefahr, dass das exklusiv zugeteilte Identifikationssignal nie korrekt empfangen wird oder dass ein zeitlich verschobener Ausschnitt eines fremden Signalblockes vom Empfänger als das zugeordnete Identifikationssignal samt Zusatzinformation interpretiert wird. Durch das somit bislang unvermeidliche Synchronisieren jedes Empfängers mit dem zugeordneten Sender geht regelmässig wertvolle Uebertragungszeit verloren und ist ein zusätzlicher Aufwand in den elektrischen Schaltungsanordnungen der Sender und der Empfänger erforderlich. Zudem besteht auch die Gefahr von Fehlern bei der Synchronisation.

Aus der US-A-4 290 143 ist ferner ein System mit einem Sender und mehreren Empfängern, welche das gleiche Medium benützen, bekannt. Dabei wird eine kleine Autokorrelation der Symbole (Barker-Sequenzen) in jeder beliebigen Phasenlage zu anderen Symbolen (Barker-Sequenzen) benutzt und bedarf spezieller Mittel für die Synchronisation der Symbolfolge. Einer der Hauptnachteile dieses Systems liegt darin, da die Barker-Sequenz selbst als Folge von binären Symbolen aufzufassen ist, dass bei deren Verwendung in einem System mit mehreren Sender-Empfänger-Paaren (SEP), welche das gleiche Medium benützen, höchstens zwei solche Paare unterscheidbar sind. Damit könnte aber die hier gestellte Aufgabe, nämlich sehr viele SEP im gleichen Medium zu unterscheiden, nicht gelöst werden.

Die US-A-3 801 956 schliesslich beschreibt ein Verfahren und eine Einrichtung zur Detektion von binären Symbolen aus einer Symbolfolge. Die Verwendung dieses Verfahrens in einem System mit mehreren SEP im gleichen Medium wird nicht erwähnt, d.h. eine Anwendung dieses Verfahrens zur Unterscheidung verschiedener SEP, welche das gleiche Uebertragungsmedium benützen, weder beschrieben noch nahegelegt.

Aufgabe der vorliegenden Erfindung ist es nun, ein Verfahren der eingangs genannten Art derart auszugestalten, dass die Notwendigkeit einer Synchronisation des Empfängers entfällt und somit der Sender keine Synchronisierinformation auszustrahlen hat, so dass bei der Authentifikation nicht nur wertvolle Uebertragungszeit eingespart wird, sondern zusätzlich auch eine Vereinfachung der Sender und Empfänger ermöglicht ist.

Diese Aufgabe ist durch Schaffung des im Patentanspruch 1 definierten erfindungsgemässen Verfahrens gelöst.

Zweckdienliche und vorteilhafte Weiterbildungen des Verfahrens gemäss der Erfindung ergeben sich aus den abhängigen Patentansprüchen.

Die Erfindung und deren Vorteile sind nachstehend anhand von Ausführungsbeispielen unter Bezugnahme auf die beigefügten Zeichnungen näher erläutert. Es zeigen:

Fig. 1 ein Blockschaltbild einer Einrichtung zum Aussenden eines sich periodisch wiederholenden Identifikationssignals, das aus einer endlichen Folge von $n$ Symbolen besteht, die ihrerseits aus einer endlichen Menge $m$ entnommen sind;

Fig. 2 ein analoges Blockschaltbild einer Einrichtung zum Empfangen, Prüfen und Auswerten des von der Einrichtung gemäss Fig. 1 drahtlos übermittelten Identifikationssignals;

Fig. 3 ein Blockschaltbild einer an sich bekannten einfachen Einrichtung zum Erzeugen von für das erfindungsgemässe Verfahren geeigneten Identifikationssignalen;

Fig. 4 ein Blockschaltbild einer anderen, ebenfalls an sich bekannten Einrichtung zum Erzeugen von für das erfin dungsgemässe Verfahren noch besser geeigneten Identifikationssignalen;

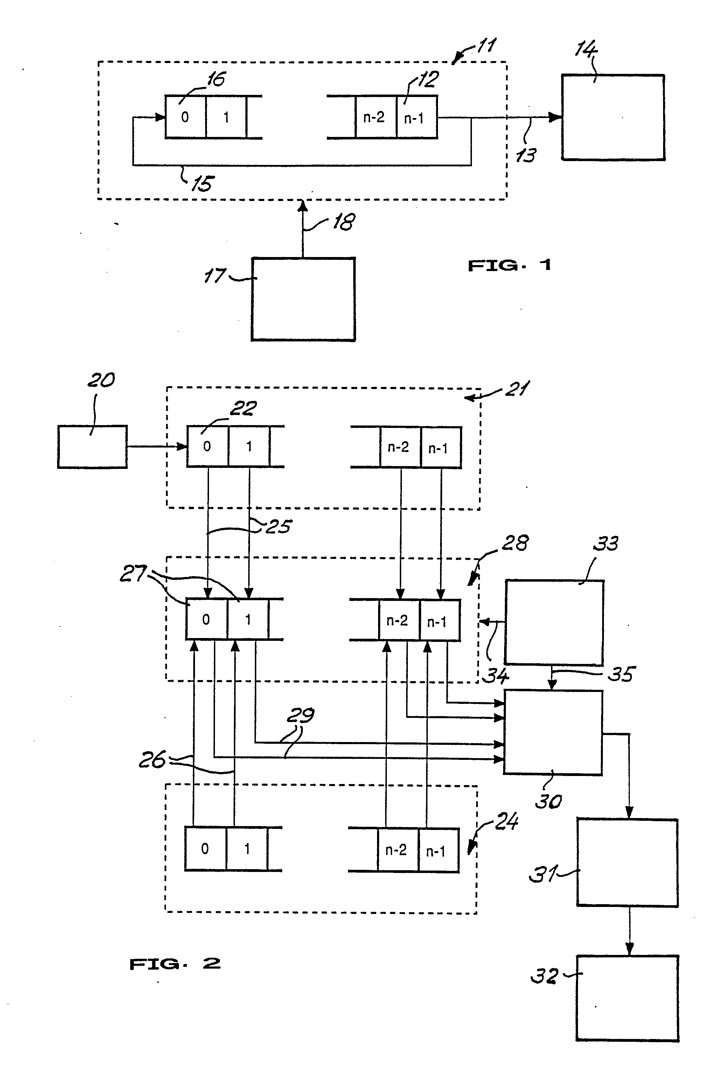

Die in Fig. 1 dargestellte Einrichtung weist ein Schieberegister 11 mit mehreren Speicherzellen auf, deren Anzahl $n$ gleich der Anzahl Symbole eines dem betreffenden Sender exklusiv zugeteilten Codewortes ist. Der Ausgang der Endzelle 12 des Schieberegisters 11 ist sowohl mittels einer Leitung 13 mit einer Uebertragungseinrichtung 14 als auch mittels einer weiteren Leitung 15 mit dem Eingang der Anfangszelle 16 des Schieberegisters verbunden. Dem Schieberegister 11 ist ein Taktoszillator 17 zugeordnet, der in gleichen Zeitintervallen jeweils einen Steuerimpuls erzeugt und über eine Leitung 18 an einen Steuereingang des Schieberegisters liefert, um dieses zu veranlassen, den Speicherinhalt jeder Speicherzelle in die nächstfolgende zu übertragen.

Vor dem Aufbau einer Verbindung mit dem zugeordneten Empfangsgerät werden die Symbole des dem Sender exklusiv zugeteilten Codewortes in die Speicherzellen des Schieberegisters 11 eingespeichert. Es sei rein beispielsweise angenommen, das Codewort bestehe aus der Symbolfolge 0011101, also aus einer Anzahl $n = 7$ Symbole aus einer Menge $m = 2$ verschiedener Symbole 0 und 1. Während der ganzen Dauer der Verbindung mit dem zugeordneten Empfangsgerät werden die im Schieberegister 11 gespeicherten Symbole in Steuerabhängigkeit vom Taktoszillator 17 jeweils in die nächstfolgende Speicherzelle weitergeschoben, wobei das Symbol in der Endzelle 12 an die Uebertragungseinrichtung 14 zur Aussendung übergeben und gleichzeitig auch in die Anfangszelle 16 des Schieberegisters geschoben wird. Die Uebertragungseinrichtung 14 sendet somit eine ununterbrochene zyklische Folge von Symbolen aus, und zwar vorzugsweise in Form von unterschiedlichen Tonfrequenzen unterhalb des Sprachfrequenzbandes.

Die in Fig. 2 dargestellte Einrichtung weist eine Vorrichtung 20 für den drahtlosen Empfang der mittels der Uebertragungseinrichtung 14 (Fig. 1) ausgesendeten Symbole und ein Schieberegister 21 mit der gleichen Anzahl $n$ Speicherzellen wie im Schieberegister 11 (Fig. 1) auf. Der Eingang der Anfangszelle 22 des Schieberegisters 21 ist mittels einer Leitung 23 mit der Empfangsvorrichtung 20 verbunden, so dass die empfangenen Symbole nacheinander in das Schieberegister 21 eingespeichert werden. Weiter ist in der Einrichtung gemäss Fig. 2 ein Register 24 mit der gleichen Anzahl $n$ Speicherzellen wie im Schieberegister 21 vorhanden. In den Speicherzellen dieses Registers 24 ist die Sollsymbolfolge eingespeichert, die mit dem Codewort des zugeordneten Senders gemäss Fig. 1 übereinstimmt.

Einander entsprechende Speicherzellen des Schieberegisters 21 und des Registers 24 sind paarweise mittels Leitungen 25 und 26 mit Eingängen eines jeweils zugeordneten Vergleichsmittels 27 verbunden, das vorzugsweise derart ausgebildet ist, dass sein Ausgang zwei verschiedene Werte annimmt, je nach dem, ob die Signale auf den Leitungen 25 und 26 gleich oder ungleich sind. Vorzugsweise nimmt der Ausgang den Wert 1 an, wenn die Signale gleich sind, und den Wert 0, wenn die Signale ungleich sind. Die Vergleichsmittel 27 bilden zusammen eine Vergleicheranordnung 28, und ihre Anzahl ist gleich der Anzahl der Speicherzellen des Schieberegisters 21 bzw. des Registers 24. Jedes Vergleichsmittel 27 weist einen Ausgang auf, der mittels einer Leitung 29 mit einem Addierer 30 verbunden ist. An einen Ausgang des Addierers 30 ist ein Schwellenwertdetektor 31 angeschlossen, der nur jene Addditionsergebnisse des Addierers 30, die einen vorgegebenen Schwellenwert überschreiten, an eine Steuervorrichtung 32 zum Einschalten bzw. Unterbrechen der Verbindung leitet. Schliesslich weist die Einrichtung gemass Fig. 2 noch einen Taktoszillator 33 zum Erzeugen von periodischen Taktimpulsen auf, die über Leitungen 34 und 35 an Steuereingänge der Vergleicheranordnung 28 bzw. des Addierers 30 geführt werden.

Die mittels des Taktoszillators 33 erzeugten Taktimpulse bewirken, dass alle Vergleichsmittel 27 der Vergleicheranordnung 28 periodisch die Speicherinhalte der Zellen des Schieberegisters 21 mit den Speicherinhalten der entsprechenden Zellen des Registers 24 vergleichen und die einzelnen Vergleichsresultate an den Addierer 30 liefern, und dass der Addierer seinerseits periodisch die ihm zugeleiteten Vergleichsresultate addiert und dann das Additionsergebnis K an den Schwellenwertdetektor 31 leitet. Das erwähnte Additionsergebnis K des Addierers 30 bezeichnet man als Kreuzkorrelation der im Vergleichszeitpunkt im Schieberegister 21 und im Register 24 gespeicherten Symbolfolgen. Die Frequenz der Steuerimpulse des Taktoszillators 33 ist vorzugsweise etwa gleich der Frequenz der Steuerimpulse des Taktoszillators 17 der senderseitigen Einrichtung gemäss Fig. 1, so dass die zeitlichen Intervalle der empfängerseitig durchgeführten Kreuzkorrelationen wenigstens annähernd gleich den Intervallen der Symbole des vom zugeordneten Sender ausgestrahlten Identifikationssignals sind.

Wenn die Empfangsvorrichtung 20 (Fig. 2) keine anderen Signale als die vom zugeordneten Sender gemäss Fig. 1 ausgestrahlte zyklische Symbolfolge empfängt, bezeichnet man das vom Addierer 30 jeweils gelieferte Additionsergebnis K als Autokorrelation des Identifikationssignals des zugeordneten Senders. Die Autokorrelation erreicht einen Maximalwert A, wenn die im Schieberegister 21 vorliegende Symbol folge und die im Register 24 gespeicherte Sollsymbolfolge exakt übereinstimmen. Wenn jedoch die vom zugeordneten Sender stammende Symbolfolge im Schieberegister 21 gegenüber der Sollsymbolfolge im Register 24 um ein oder mehrere Symbolintervalle verschoben ist, bleibt das Additionsergebnis K am Ausgang des Addierers 30 in der Regel kleiner als A. Da, wie erwähnt, das vom Sender ausgestrahlte Identifikationssignal zyklisch periodisch ist, wird beim Empfang des Identifikationssignals des zugeordneten Senders das Additionsergebnis am Ausgang des Addierers 30 mindestens einmal pro Periode den Wert A annehmen. Ist aber das empfangene Identifikationssignal des zugeordneten Senders mit Fehlern behaftet, die z.B. durch Rauschen oder Funkstörungen hervorgerufen werden, wird der Wert A möglicherweise nicht mehr erreicht.

In der Praxis wird die Empfangsvorrichtung 20 nicht nur die vom zugeordneten Sender ausgestrahlen Symbole sondern auch Fremdsignale von anderen im gleichen Kommunikationssystem gleichzeitig arbeitenden Sendern empfangen, die dann in das Schieberegister 21 eingegeben werden. Um nun die Authentifikation des zugeordneten Senders zu ermöglichen, wird das jedem Sender im Kommunikationssystem exklusiv zugeteilte Identifikationssignal derart gewählt, dass jeder Wert K der Kreuzkorrelation des Identifikationssignals mit jedem andern im Kommunikationssystem vorkommenden Identifika tionssignal um einen Mindestwert D kleiner ist als der Maximalwert A der Autokorrelation des zugeteilten Identifikationssignals. Unter dieser Voraussetzung ist der Empfänger gemäss Fig. 2 in der Lage, zwischen dem Identifikationssignal des ihm zugeordneten Senders und den Identifikationssignalen anderer Sender zu unterscheiden. Wenn die am Ausgang des Addierers 30 erhaltenen Additionswerte K während einer Zeitspanne von mehr als einer Periode des zugeteilten Identifikationssignals kleiner sind als (A - D), so ist dies ein Zeichen dafür, dass kein Empfang des zugeteilten Identifikationssignal vorliegt. Die Ansprechschwelle T des Schwellenwertdetektors 31 wird vorteilhaft so zwischen die Werte A und (A - D) gelegt, dass zwar vom zugeteilten Sender stammende Identifikationssignale mit einem gewissen Anteil an fehlerhaft übertragenen Symbolen noch anerkannt werden, dass aber fremde Identifikationssignale, die durch einzelne fehlerhaft übertragene Symbole eine Kreuzkorrelation K grösser als (A - D) erreichen, nicht als eigene anerkannt werden. Der Schwellenwertdetektor 31 liefert somit jedesmal ein Ausgangssignal, wenn wieder eine der eigenen Sollsymbolfolge genügend ähnliche momentane Symbolfolge im Schieberegister 21 vorliegt. Die Steuervorrichtung 32 unterbricht die Sprechverbindung, wenn der Schwellenwertdetektor 31 während einer gewissen Zeitdauer von z.B. 10 Sekunden kein Ausgangssignal mehr liefert. Umgekehrt kann die Steuervorrichtung 32 die Sprechverbindung jeweils erst dann einschalten, wenn der Ausgang des Addierers 30 ausreichend hohe Additionsresultate K liefert, die über der Ansprechschwelle T des Schwellenwertdetektors 31 liegen und darauf schliessen lassen, dass die empfangene Symbolfolge das Identifikationssignal des zugeordneten Senders ist.

Um Identifikationssignale mit je n Symbolen zu bilden, welche Identifikationssignale sich bei einer fehlerfreien Uebertragung um den Mindestwert D unterscheiden, kann man z.B. wie folgt vorgehen: Man wählt einen linearen zyklischen Blockcode mit k Informationssymbolen, wobei k kleiner als n ist und der Blockcode allgemein definiert werden kann durch das Paritätsprüfungspolynom:

$$H(x) = h_0 + h_1x + h_2x^2 + h_3x^3 + ... + h_{k-1}x^{k-1} + h_kx^k$$

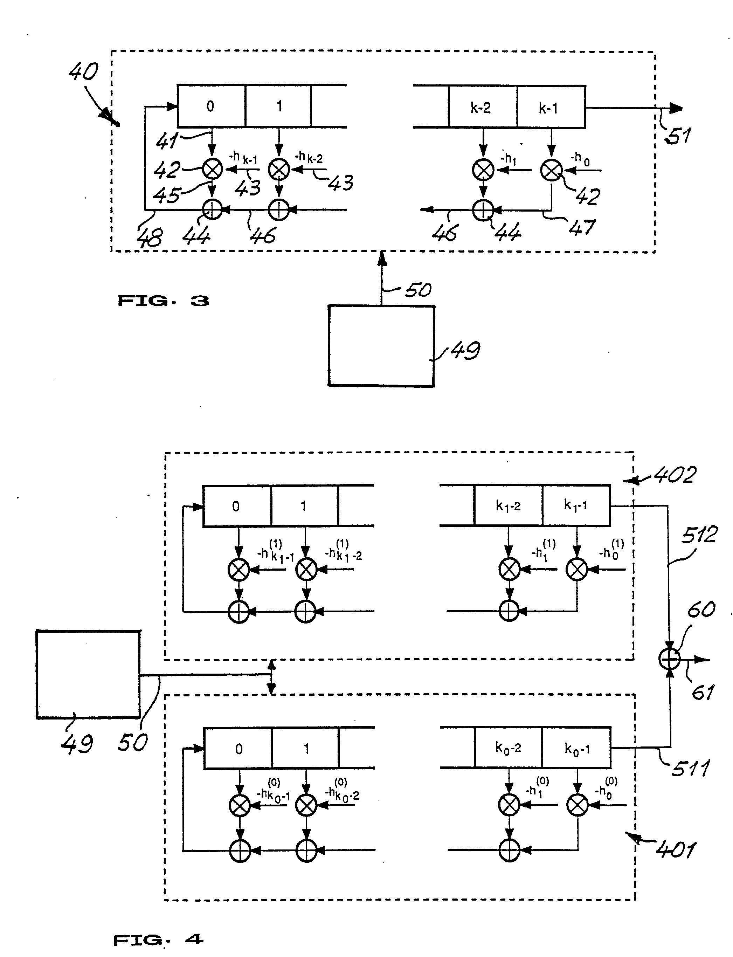

Zum Erzeugen der gewünschten Identifikationssignale kann man mit Vorteil die in Fig. 3 beispielsweise und schematisch gezeigte Einrichtung benutzen. Diese Einrichtung weist ein lineares rückgekoppeltes Schieberegister 40 mit k Speicherzellen auf, in welche man die k Informationssymbole des oben erwähnten Blockcodes einspeichert. In Fig. 3 sind die Speicherzellen mit 0, 1, ... k-2 und k-1 bezeichnet. Jede Speicherzelle des Schieberegisters 40 hat einen Ausgang, der mittels einer Leitung 41 mit einem Eingang eines zugeordneten Multipizierers 42 verbunden ist. Ein zweiter Eingang 43 jedes Multiplizierers 42 dient zum Eingeben eines konstanten Multiplikationsfaktors. Dieser ist gleich einem der für den Code benutzten Symbole aus der Menge m. Im Falle eines binären Codes kann der Multiplikationsfaktor nur entweder 0 oder 1 sein. Der Ausgang jedes Multiplizierers 42 liefert ein Signal, welches das Resultat einer ganzzahligen Multiplikation der beiden Eingangssignale modulo der Symbolmenge m ist.

Die Einrichtung gemäss Fig. 3 weist ferner k-1 Addierer 44 mit je zwei Eingängen und einem Ausgang auf. Der eine Eingang jedes Addierer 44 ist über eine Leitung 45 mit dem Ausgang eines der

Multipizierer 42 verbunden, mit Ausnahme des der letzter Speicherzelle k-1 zugeordneten Multiplizierers. Der andere Eingang jedes Addierers 44 steht über eine Leitung 46 mit dem Ausgang des der benachbarten Speicherzelle zugeordneten Addierers bzw. über eine Leitung 47 mit dem Ausgang des der letzter Speicherzelle k-1 zugeordneten Multziplizierers 42 in Verbindung. Mittels einer weiteren Leitung 48 ist der Ausgang des der ersten Speicherzelle 0 zugeordneten Addierers 42 mit dem Eingang des Schieberegisters 40 verbunden. Das Ausgangssignal jedes Addierers 44 ist das Resultat einer ganzzahligen Addition der beiden Eingangssignale modulo der Symbolmenge m. Ein Taktsignalgeber 49 ist über eine Leitung 50 mit einem Steuereingang des Schieberegisters 40 verbunden. Durch jedes Taktsignal wird der jeweilige Inhalt der Speicherzellen des Schieberegisters in Fig. 3 nach rechts verschoben, wobei der ersten Speicherzelle 0 jeweils ein neues Symbol vom Ausgang des zugeordneten Addierers 44 zugeführt wird und die letzte Speicherzelle k-1 das in ihr gespeicherte Symbol an einen Ausgang 51 liefert.

Wird das Schieberegister 40 n mal geschoben, erscheinen am Ausgang 51 nacheinander n Symbole, die ein Identifikationssignal bilden. Durch jeweils n weitere Taktsignale ergibt sich am Ausgang des Schieberegisters 40 eine weitere, identische Folge von n Symbolen.

Damit der bereits erwähnte Mindestunterschied D aller Identifikationssignale erzielt wird, muss man dafür sorgen, dass keines der Identifikationssignale in irgend einer zyklischen Verschiebung sich um weniger als die minimale Hamming Distanz $d_{min}$ von jedem andern Identifikationssignal unterscheidet. (Die Hamming Distanz ist gleich der Mindestanzahl unterschiedlicher Symbole in ver schiedenen Codewörtern und damit ein Mass für die Güte des Codes.) Dieser Forderung wird dadurch entsprochen, dass man aus jedem Zyklus von Identifikationssignalen nur eines auswählt. Damit wird die Anzahl der effektiv nutzbaren Identifikationssignale kleiner und damit auch die Anzahl von nutzbaren Informationssymbolen kleiner als die ursprünglich verfügbare Anzahl k von Informationssymbolen.

Um die Erzeugung von mehr als einem Identifikationssignal pro Zyklus zu vermeiden, ist es zweckmässig, die mit Bezug auf Fig. 3 beschriebene Einrichtung zu modifizieren, wie in Fig. 4 gezeigt ist. Bei dieser modifizierten Einrichtung sind zwei lineare rückgekoppelte Schieberegister 401 und 402 vorhanden, von denen jedes gleich ausgebildet und in gleicher Weise rückgekoppelt ist, wie das in Fig. 3 gezeigte Schieberegister 40. Die beiden Schieberegister 401 und 402 weisen eine Anzahl $k_0$ bzw. $k_1$ Speicherzellen auf, und dementsprechend ist jeweils auch die Anzahl der zugeordneten Multiplizierer 42 und Addierer 44 gleich $k_0$ bzw. $k_1$. Die Ausgangsleitungen 511 und 512 der beiden Schieberegister 401 und 402 sind mit zwei Eingängen eines Addierers 60 verbunden, an dessen Ausgang 61 die jeweils erzeugten Identifikationssignale erscheinen. Ein Taktsignalgeber 49 steht über eine Leitung 50 mit der Steuereingängen der beiden Schieberegister 401 und 402 in Verbindung.

Das Paritätsprüfungspolynom H(x) lässt sich in die Polynomfaktoren $H^{(0)}(x)$ und $H^{(1)}(x)$ zerlegen, wobei $H^{(0)}(x)$ irreduzibel sein muss, den Grad $k_0$ und die Ordnung n hat, welche gleich der Anzahl der Symbole eines Identifikationssignals ist. Diese Zerlegung ist immer möglich. Damit wird $H(x) = H^{(0)}(x) \cdot H^{(1)}(x)$, wobei $H^{(1)}$ den Grad $k_1 = k - k_0$ hat. In der Einrichtung gemäss Fig. 4 gestatten die linear rückgekoppelten Schieberegister 401 und 402, die durch die Polynomfaktoren $H^{(0)}(x)$ und $H^{(1)}(x)$ definierten Codewörter zu bilden, die dann mittels des Addierers 60 kombiniert werden. Die am Ausgang 61 des Addierers 60 erscheinenden Symbolfolgen sind jenen aequivalent, die mit der Einrichtung gemäss Fig. 3 erzeugt und am Ausgang 51 ausgegeben werden.

Eine beliebige Sequenz von $k_1$ Symbolen wird als Anfangswerte in das Schieberegister 402 eingespeichert. In das andere Schieberegister 401 hingegen werden nur solche Sequenzen von $k_0$ Symbolen als Anfangswerte eingespeichert, die aus verschiedenen Zyklen mit der Periodenlänge n stammen. Wenn das Schieberegister 401 also z Zyklen der Periodenlänge n enthält, sind z verschiedene Anfangswerte möglich, und es können im Schieberegister 401 $k_0{}^* = \log_m z$ Informationssymbole codiert werden. Ist $k_0{}^*$ nicht eine ganze Zahl, so kann ein Informationssymbol nicht in jedem Fall alle möglichen Werte aus der Menge m der Symbole annehmen. Wenn man nachher mittels des Taktsignalgebers 49 die beiden Schieberegister 401 und 402 gleichzeitig n mal schiebt, entsteht am Ausgang 61 eine Sequenz der Periode n von Symbolen, die zu den $k_2 = k_1 + k_0{}^*$ nutzbaren Informationssymbolen gehören.

Ist das irreduzible Polynom $H^{(0)}(x)$ zusätzlich noch primitiv, ist nur eine (beliebige) Sequenz von $k_0$ Symbolen als Anfangswerte im Schieberegister 401 zulässig, wobei nicht alle $k_0$ Symbole gleich Null sein dürfen. In diesem Fall ist die Anzahl $k_2$ von nutzbaren Informationssymbolen gleich $k_1$, weil $k_0{}^* = 0$ ist.

Die beschriebene Art und Weise der Bildung von brauchbaren Identifikationssignalen mit Hilfe von Schieberegistern ist lediglich eine von mehreren Möglichkeiten, die allgemein benützbar sind, um Codewörter eines linearen zyklischen Codes zu erzeugern. Sie wurde als Beispiel gewählt, weil sie für eine praktische Durchführung des erfindungsgemässen Verfahrens am besten geeignet erscheint. Grundsätzlich werden dabei von einem linearen zyklischen Code C mit k Informationssymbolen, eine Codewortlänge n und dem Paritätsprüfungspolynom H(x) nur diejenigen Codewörter als Identifikationssignale verwendet, die als Summe von einem Codewort eines linearen zyklischen Codes $C^{(0)}$ mit $k_0$ Informationssymbolen, Codewortlänge n und Paritätsprüfungspolynom $H^{(0)}(x)$, einerseits, und einem Codewort eines linearen zyklischen Codes $C^{(1)}$ mit $k_1$ Informationssymbolen, der Codewortlänge n und dem Paritätsprüfungspolynom $H^{(1)}(x)$ andererseits, darstellbar sind, wobei das Polynom $H^{(0)}(x)$ irreduzibel und von der Ordnung n ist und wobei nur Codewörter des Codes $C^{(0)}$ verwendet werden dürfen, die aus verschiedenen Zyklen der Länge n stammen.

## Ansprüche

1. Verfahren zur Authentifikation einer Punkt-Punkt-Verbindung in einem kommunikationssystem, dessen Uebertragungsmedium von mehreren Sender-Empfänger-Paaren gleichzeitig benützbar ist, bei welchem Verfahren jeder aktivierte Sender ein ihm exklusiv zugeteiltes Identifikationssignal wiederholt aussendet, das eine Folge von Symbolen aufweist, und jeder aktivierte Empfänger die empfangenen Identifikationssignale mit einer Sollsymbolfolge des Identifikationssignals des zugeordneten Senders vergleicht, dadurch gekennzeichnet, dass das jedem Sender exklusiv zugeteilte Identifikationssignal derart gewählt wird, dass jeder Wert der Kreuzkorrelation des Identifikationssignals mit jedem anderen im kommunikationssystem vorkommenden Identifikationssignal signifikant kleiner ist als der Maximalwert der Autokorrelation des Identifikationssignals, dass jeder aktivierte Empfänger eine Anzahl der nacheinander empfangenen Symbole vorübergehend speichert und periodisch eine Kreuzkorrelation der gespeicherten Symbolfolge mit der Sollsymbolfolge des Identifikationssignals des zugeordneten Senders bildet und die so erhaltene Kreuzkorrelation mit der Autokorrelation der Sollsymbolfolge des Identifikationssignals des zugeordneten Senders vergleicht, und dass der Unterschied zwischen der erhaltenen Kreuzkorrelation und der Autokorrelation als Schätzung für die Authentifikation verwendet und ausgewertet wird.

2. Verfahren nach Anspruch 1, dadurch gekennzeichnet, dass die Intervalle der von jedem aktivierten Empfänger periodisch durchgeführten Kreuzkorrelationen wenigstens annähernd gleich den Intervallen der Symbole des Identifikationssignals des zugeordneten Senders sind.

3. Verfahren nach Anspruch 1 oder 2, dadurch gekennzeichnet, dass die Identifikationssignale der Sender periodisch sind.

4. Verfahren nach Anspruch 3, dadurch gekennzeichnet, dass eine Periode des jedem Sender exklusiv zugeteilten periodischen Identifikationssignals aus einer endlichen Folge von Symbolen aus einer endlichen Menge von Symbolen gebildet wird.

5. Verfahren nach einem der Ansprüche 1 bis 4, dadurch gekennzeichnet, dass das jedem Sender exklusiv zugeteilte Identifikationssignal ein Codewort eines linearen zyklischen Codes ist.

6. Verfahren nach den Ansprüchen 3 bis 5, dadurch gekennzeichnet, dass die Symbolfolge einer Periode jedes Identifikationssignals ein Codewort eines linearen zyklischen Codes bildet, wobei pro Zyklus des Codes höchstens ein Codewort verwendet wird.

7. Verfahren nach Anspruch 6, dadurch gekennzeichnet, dass jedes Codewort des Identifikationssignals als Summe von zwei andern Codewörtern gebildet wird, die verschiedenen linearen zyklischen Ausgangscodes mit der gleichen Codewortlänge wie das Codewort des Identifikationssignals entstammen, wobei von einem der Ausgangscodes nur einige und vom andern Ausgangscode alle Codewörter verwendet werden.

8. Verfahren nach Anspruch 7, dadurch gekennzeichnet, dass derjenige Ausgangscode, von dem nur einige Codewörter verwendet werden, als Paritätsprüfungspolynom ein irreduzibles Polynom hat, dessen Ordnung gleich der Codewortlänge ist, und welches, multipliziert mit dem Paritätsprüfungspolynom des andern Ausgangscodes, das Paritätsprüfungspolynom des Codes des Identifikationssignals ergibt.

9. Verfahren nach Anspruch 8, dadurch gekennzeichnet, dass die benützten Codewörter desjenigen Ausgangscodes, von dem nur einige Codewörter verwendet werden, alle aus verschiedenen Zyklen stammen, deren Längen je gleich der Codewortlänge des Identifikationssignals sind.

10. Sender und Empfänger zur Durchführung des Verfahrens nach einem der Ansprüche 1 bis 9, dadurch gekennzeichnet,

(a) dass jeder Sender im Kommunikationssystem ein rückgekoppeltes Schieberegister (11) mit einer Anzahl Speicherzellen sowie einen zugehörigen Taktoszillator (17) aufweist, dass die Anzahl der Speicherzellen mit der Anzahl Symbole des Identifikationssignals des Senders übereinstimmt und dass ein Ausgang der Endzelle (12) des Schieberegisters (11) mit einer Uebertragungseinrichtung (14) verbunden ist, die zum Aussenden einer zyklischen Folge der Symbole des Identifikationssignals des Senders dient; und

(b) dass jeder Empfänger im Kommunikationssystem eine Empfangsvorrichtung (20) zum Empfangen von Symbolen und ein Schieberegister (21) mit Speicherzellen aufweist, deren Anzahl mit jener des Schieberegisters (11) des Senders übereinstimmt, dass die Anfangszelle (22) des Schieberegisters (21) mit einem Ausgang der Empfangsvorrichtung (20) verbunden ist, so dass die empfangenen Symbole nacheinander in das Schieberegister (21) eingespeichert werden, dass ferner jeder Empfänger ein Register (24) mit Speicherzellen zum Speichern der Sollsymbolfolge des Identifikationssignals des zugeordneten Senders aufweist, dass einander entsprechende Speicherzellen des Schieberegisters (21) und des Registers (24) des Empfängers paarweise mit je einem Vergleicher (27) einer Vergleichsvorrichtung (28) verbunden sind, dass jeder Vergleicher (27) einen Ausgang (29) aufweist, der mit einem Eingang eines Addierers (30) zum Addieren aller Vergleichsresultate der Vergleicher (27) verbunden ist, dass ein Taktoszillator (33) der Vergleichsvorrichtung (28) und dem Addierer (30) zugeordnet ist, um die zwei letztgenannten periodisch zu veranlassen, den jeweiligen Speicherinhalt des Schieberegisters (21) mit der im Register (24) gespeicherten Sollsymbolfolge zu vergleichen und die Vergleichsresultate mittels des Addierers (30) zu summieren, und dass der Ausgang des Addierers (30) über einen Schwellenwertdetektor (31) mit einer Steuervorrichtung (32) verbunden ist, die zum Einschalten und Aufrechterhalten der Kommunikationsverbindung zum empfangenen Sender bei ausreichend guter Uebereinstimmung der empfangenen Symbolfolgen mit der Sollsymbolfolge dient.

11. Sender und Empfänger nach Anspruch 10, dadurch gekennzeichnet, dass der Taktoszillator (17) des Senders und der Taktoszillator (33) des Empfängers wenigstens annähernd gleiche Taktfrequenzen aufweisen.

FIG. 1

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 290 143 (WISSEL et al.)<br>* Spalte 1, Zeile 49 - Spalte 2, Zeile 21; Spalte 3, Zeilen 4-29; Figuren 1,6 *<br><br>--- | 1 | H 04 M 1/72<br>H 04 Q 7/04<br>G 06 F 15/336 |
| X | WO-A-8 701 490 (MOTOROLA)<br>* Seite 12, Zeilen 4-17; Seite 18, Zeile 3 - Seite 19, Zeile 19; Anspruch 1 * | 1 | |
| A | --- | 10 | |
| X | US-A-3 801 956 (BRAUN et al.)<br>* Spalte 2, Zeile 36 - Spalte 4, Zeile 48; Figur 1 * | 10 | |
| A | --- | 11 | |
| A | GB-A-2 110 850 (MULTITONE ELECTRONICS)<br>* Zusammenfassung; Figur 2 *<br>--- | 1 | |
| A | EP-A-0 091 619 (K.K. TOSHIBA)<br>* Zusammenfassung *<br>--- | 1 | RECHERCHIERTE SACHGEBIETE (Int. Cl.4) |
| A,D | US-A-4 332 981 (PALOMBI et al.)<br>* Spalte 2, Zeilen 25-60 *<br>--- | 2-4 | H 04 M<br>H 04 Q |
| A | US-A-3 873 920 (APLLE, Jr. et al.)<br>* Zusammenfassung; Figur *<br>----- | 5-9 | H 04 J<br>H 04 L<br>G 06 F<br>G 08 C |

Der vorliegende Recherchenbericht wurde für alle Patentansprüche erstellt

| Recherchenort | Abschlußdatum der Recherche | Prüfer |
|---|---|---|
| DEN HAAG | 04-09-1989 | GASTALDI G.L. |